# EUROPÄISCHE PATENTSCHRIFT

(11) **EP 1 213 170 B1**
(45) Veröffentlichungstag und Bekanntmachung des Hinweises auf die Patenterteilung: **11.04.2007**
(21) Anmeldenummer: 01129479.0
(22) Anmeldetag: 11.12.2001
(51) Int. Cl.: B60J 7/185, B60J 7/06, B60J 1/18

(54) **Verriegelungsvorrichtung für eine versenkbare Heckscheibe eines Kraftfahrzeugs**
Locking device for retractable back window of vehicle
Système de verouillage pour fenêtre arrière de véhicule

(30) Priorität: 11.12.2000 FR 0016048
(43) Veröffentlichungstag der Anmeldung: 12.06.2002
(73) Patentinhaber: Webasto Vehicle Systems International GmbH, 82131 Stockdorf (DE)
(72) Erfinder: Guicheteau, Jean-Luc, 49300 Cholet (FR)
(74) Vertreter: Wiese, Gerhard

(56) Entgegenhaltungen:
- DE-A- 4 419 128
- DE-A- 19 604 855
- US-A- 5 435 615

## Beschreibung

Die vorliegende Erfindung bezieht sich auf eine allgemein bekannte Verriegelungsvorrichtung für eine versenkbare Heckscheibe eines Kraftfahrzeuges zur Verriegelung derselben an der Karosserie des Fahrzeuges gemäß dem Oberbegriff des Patentanspruchs 1.

Zahlreiche Kraftfahrzeuge, insbesondere Fahrzeuge mit einem zu öffnenden Dach, verwenden eine versenkbare Heckscheibe, d.h. also eine Heckscheibe, welche auf einem in Bezug auf die Karosserie zwischen einer ausgefahrenen aktiven Stellung, bei der das Gehäuse auf einem karosseriefesten Falz aufliegt, und einer versenkten Stellung, bei der die Heckscheibe in einer im Kofferraum des Fahrzeuges vorgesehenen Aufnahme untergebracht ist, beweglichen Gestell montiert ist.

Bei bestimmten Fahrzeugtypen ruht das zu öffnende Dach, insbesondere das zu öffnende weiche, aus Stoff bestehende Dach, in der geöffneten Stellung auf der Heckscheibe, so dass das Versenken derselben zu einer vollständigen Öffnung des Fahrzeugdaches führt.

Es ist demzufolge interessant, die Heckscheibe und ihr Gestell an der Karosserie des Fahrzeuges verriegeln zu können, um unabhängig vom Typ des zu öffnenden Daches ein Verriegeln der Heckscheibe zu erlauben.

Das Verriegeln der Heckscheibe in der ausgefahrenen Stellung erfolgt im allgemeinen mittels eines Verriegelungsorgans, welches einen Haken aufweist, welcher an einem Träger zwischen einer Verriegelungsstellung der Heckscheibe in der ausgefahrenen Stellung und einer entriegelten Stellung der genannten Heckscheibe schwenkbar ist, und einen Finger, welcher mit dem Haken zusammenwirkt, um die genannte Heckscheibe durch die Betätigung eines manuell zu betätigenden Griffes zu verriegeln, wobei der Träger und der Finger einerseits, vorzugsweise der Träger, an der Karosserie des Fahrzeuges montiert sind, und andererseits, vorzugsweise der Finger, mit dem Gestell der Heckscheibe fest verbunden sind.

Wenn sich die Heckscheibe in der ausgefahrenen Position befindet, ruht sie auf dem Falz bzw. auf einer dazwischen liegenden Dichtung. Außerdem erfolgt die Schlussphase der Bewegung des Ausfahrens des Gestells in einer eine vertikale Komponente umfassenden Richtung, welche es ermöglicht, das Gestell in dem Falz auf der Dichtung unter gleichmäßiger Kompression der letzteren abzusetzen, was eine präzise Führung und Zentrierung des Gestells erfordert.

Um eine langfristige Veränderung dieser Dichtung zu vermeiden, ist es notwendig, dass die Heckscheibe und insbesondere ihr Gestell in Bezug auf den Falz bzw. die Dichtung geführt, sehr präzise zentriert und positioniert wird.

Dementsprechend liegt der vorliegenden Erfindung die Aufgabe zugrunde, eine Verriegelungsvorrichtung einer versenkbaren Heckscheibe zu liefern, welche in der Lage ist, eine präzise Führung, Zentrierung und Positionierung der Heckscheibe und ihres Gestells bezüglich des Falzes in der ausgefahrenen Stellung sicherzustellen.

Diese Aufgabe wird durch die Merkmale des Patentanspruchs 1 gelöst. Vorteilhafte Ausgestaltungen der Erfindung sind den Unteransprüchen zu entnehmen.

Die Verriegelungsvorrichtung der versenkbaren Heckscheibe vom vorgenannten Typ ist durch die Merkmale des Patentanspruchs 1 gekennzeichnet. Hierbei ist vorgesehen, dass die Verriegelungseinrichtung jeweils beidseitig im Fahrzeug einen Mechanismus zur Zentrierung des Gestells der Heckscheibe bezüglich der Karosserie aufweist, welcher ein Zentrierorgan und eine Zentrierungsaufnahme aufweist, in die das Zentrierorgan am Ende des Ausfahrhubs der Heckscheibe eingreift, wobei das Zentrierorgan und die Aufnahme zum einen, vorzugsweise das bevorzugt als Dorn ausgebildete Zentrierorgan, auf dem Gestell der Heckscheibe und das andere Bauteil, vorzugsweise die Zentrierungsaufnahme, auf dem genannten Träger vorgesehen sind, wobei Zentrierorgan und Zentrierungsaufnahme so angeordnet sind, dass das Zentrierorgan vor dem Beginn der Kompression einer am Falz der Fahrzeugkarosserie angeordneten Dichtung durch das genannte Gestell in die Aufnahme einzugreifen beginnt.

Die Verriegelungsvorrichtung nach der Erfindung kann des Weiteren eines oder mehrere der folgenden Merkmale jeweils einzeln und nach allen technisch möglichen Kombinationen aufweisen:
- das Zentrierorgan weist eine peripherische, im Wesentlichen kegelstumpfförmige Fläche auf, welche im Laufe von dessen Einführung in die Aufnahme eine Führungsrampe des Zentrierorgans begrenzt;
- ein Griff zur Betätigung des Verriegelungsorgans ist mit einem seiner Enden fest mit einer drehbaren Welle verbunden, an der mit einem seiner Enden ein Pleuel befestigt ist, wobei ein als Verriegelungsorgan fungierender Haken in drehbarer Weise an dem entgegengesetzten Ende des genannten Pleuels montiert ist;
- die Vorrichtung weist elastisch verformbare Mittel auf, welche den Haken in die Einhakposition des Fingers drücken;
- die Heckscheibe ist an einem Rahmen befestigt, welcher an seiner oberen Seite Schienen und an seiner unteren Seite die Zentrierorgane bzw. die die Ausschnitte aufweisenden Elemente aufweist;
- das freie Ende jedes Dorns ist kegelstumpfförmig und begrenzt somit eine Führungsrampe des Dorns in dem entsprechenden Ausschnitt;
- der Dorn und der Ausschnitt sind in der Weise ausgebildet, dass der Dorn erst dann in den Ausschnitt eingreift, wenn der Dorn in das Innere der Führung eingegriffen hat;
- der Rahmen ist in drehbarer Weise an dem Gestell zwischen einer geschlossenen Stellung, bei der der Rahmen auf dem Gestell aufliegt, und einer nach oben und nach vorne geöffneten Stellung im Fahrzeug für den Zugang zum Kofferraum montiert, und jeder Dorn und der entsprechende Ausschnitt sind jeweils in der Weise ausgebildet, dass diese Drehbewegung ermöglicht wird;

Die Erfindung betrifft des Weiteren nach einer zusätzlichen Ausführungsform derselben ein Kraftfahrzeug, welches ein zu öffnendes Dach, insbesondere ein weiches, aus Stoff bestehendes Dach, aufweist, dadurch gekennzeichnet, dass es außerdem eine Verriegelungsvorrichtung nach der vorliegenden Erfindung aufweist.

Weitere erfindungswesentliche Merkmale und Vorteile der Erfindung gehen aus der nachstehenden Beschreibung hervor, in der mit Bezug auf die Zeichnungen Ausführungsbeispiele erläutert werden. In den Zeichnungen zeigen:
- Fig. 1: eine schematische perspektivische Ansicht des Hecks eines Kraftfahrzeuges, welches mit einer Ausführungsform der Vorrichtung nach der Erfindung ausgestattet ist, wobei dieses Fahrzeug ein weiches, aus Stoff gefertigtes, zu öffnendes Dach, und eine in einer Aufnahme des Kofferraums des Fahrzeuges versenkbare Heckscheibe aufweist, wobei das Fahrzeug mit geschlossenem Dach dargestellt wird und die Heckscheibe zwecks Zugang zum Kofferraum nach oben und nach vorne geöffnet ist;
- Fig. 2: eine zur Fig. 1 analoge Darstellung, wobei das Fahrzeug mit geöffnetem Dach dargestellt wird, welches auf der in ihrer ausgefahrenen Stellung befindlichen Heckscheibe gefaltet und der Kofferraumdeckel nach unten und nach hinten offen ist;
- Fig. 3: eine weitere vergrößerte perspektivische Ansicht des Fahrzeuges nach den Figuren 1 und 2 mit der schematischen Darstellung der Heckscheibe in ihrer ausgefahrenen und ihrer versenkten Stellung;
- Fig. 4: eine teilweise Schnittansicht nach der Linie IV-IV der Fig. 3;
- Fig. 5: eine teilweise vergrößerte Schnittansicht nach der Linie V-V der Fig. 4;
- Fig. 6: eine teilweise vergrößerte Schnittansicht nach der Linie VI-VI der Fig. 4;
- Fig. 7: eine teilweise vergrößerte perspektivische Ansicht der Ausführungsform der in den Figuren 4 bis 6 dargestellten Verriegelungsvorrichtung nach der Erfindung.

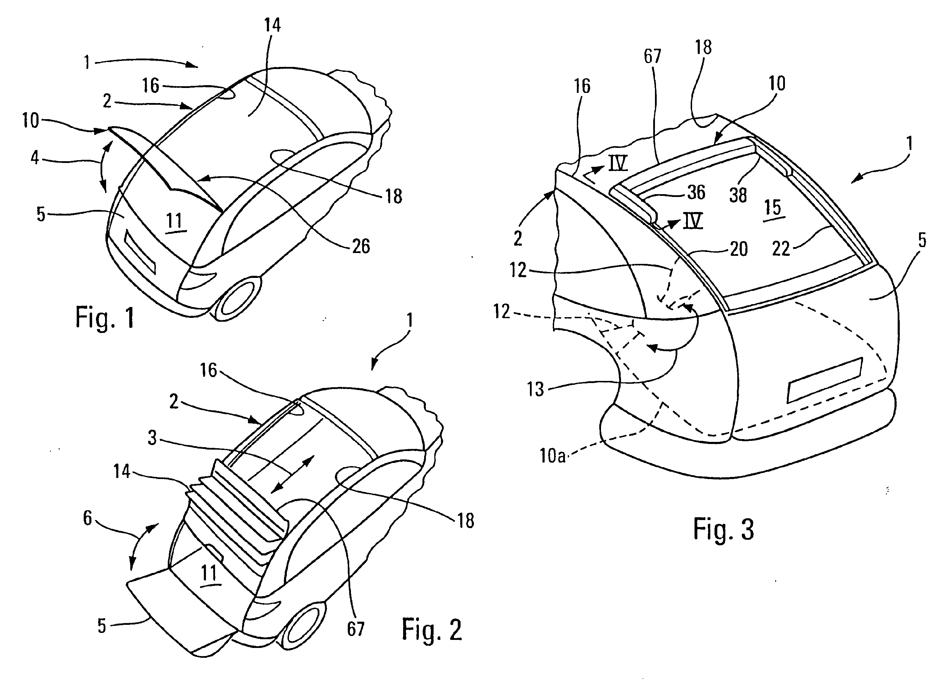

Das in den Figuren 1 bis 3 dargestellte Kraftfahrzeug 1 weist eine Heckscheibeneinheit 10 auf, welche durch einen Versenkmechanismus getragen wird, welcher in Fig. 3 schematisch durch das Bezugszeichen 12 dargestellt wird und das Versenken der Heckscheibe 10 in einer im Kofferraum 11 des Fahrzeuges vorgesehenen Aufnahme durch eine allgemeine, schematisch durch den Pfeil 13 in Fig. 3 dargestellte Kippbewegung ausführt.

Die versenkte Position der gesamten Heckscheibe 10 in den Kofferraum 11 wird in Fig. 3 bei 10a in gestrichelten Linien dargestellt.

In diesem Beispiel ist das Fahrzeug 1 mit einem elastischen zu öffnenden Dach 14 aus Stoff versehen, dessen nicht dargestellte bewegliche Elemente auf Längsschienen 16 und 18 beweglich montiert sind, welche durch die Karosserie 2 des Fahrzeuges 1 jeweils beidseitig desselben entsprechend an an sich bekannten beliebigen Strukturen getragen werden.

Die Heckscheibe 10 ist des weiteren beidseitig des Fahrzeuges 1 auf ihrer oberen Fläche 15 mit entsprechenden Schienen 20 und 22 versehen, welche sich in der Verlängerung der entsprechenden Schienen 16 und 18 erstrecken, um, wie schematisch in Fig. 2 dargestellt, das zu öffnende Dach 14 nach dessen Öffnung aufzunehmen.

Die Bewegungen der Öffnung und der Schließung des zu öffnenden Daches 14 werden schematisch durch den Pfeil 3 in Fig. 2 dargestellt.

Entsprechend bewirkt das Versenken der Heckscheibe 10 im Kofferraum 11 auch das Versenken des zu öffnenden Daches 14 in den genannten Kofferraum 11 (Pfeil 13, Fig. 3).

Im übrigen ist die Heckscheibe 10 bezüglich der Karosserie 2 des Fahrzeuges 1 kippbar montiert, wie dies durch den Pfeil 4 in Fig. 1 dargestellt wird, um nach vorne und nach oben kippen zu können, und den Zugang zum Kofferraum 11 zu erlauben, wobei der Deckel 5 des Kofferraums 11 dann, wie schematisch durch den Pfeil 6 in Fig. 2 dargestellt, geöffnet ist.

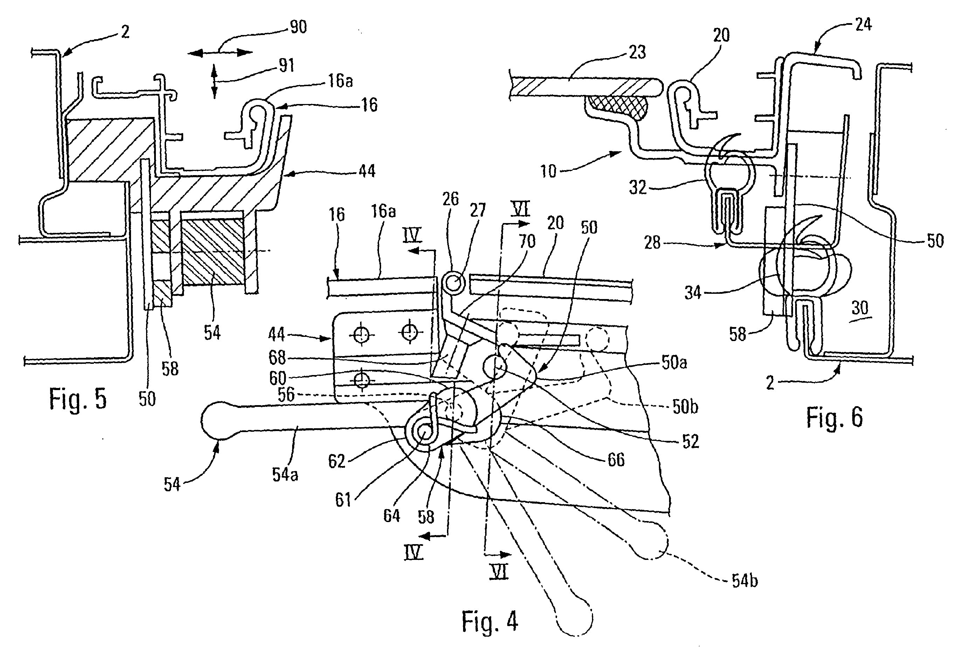

Unter weiterer Bezugnahme auf die Figuren 4 bis 7 und um diese kombinierte Bewegung des Versenkens durch Kippen nach Pfeil 13 und der Öffnung durch Rotation nach Pfeil 4 zu ermöglichen, ist das Glas 23 der Heckscheibe 10 an einem an einem Scharnier 26 montierten Rahmen 24 befestigt, welches Scharnier wiederum von einem mit den Versenkarmen 12 fest verbundenen Gestell 28 getragen wird, auf dem die Heckscheibe 10 in geschlossener bzw. ausgefahrener Stellung ruht.

Der Rahmen 24 ist entsprechend mittels des Scharniers 26 zwischen einer geschlossenen Stellung, bei der der Rahmen 24 auf dem Gestell 28 ruht, und einer nach oben und nach vorne im Fahrzeug geöffneten Stellung zwecks Zugang zum Kofferraum 11 kippbar auf dem Gestell 28 montiert.

Bei diesem Beispiel weist der Rahmen 24 beidseitig des Glases der Heckscheibe 10 auf seiner oberen Fläche Schienen 20 und 22 auf (siehe Fig. 6).

Das Gestell 28 ruht seinerseits in ausgefahrener Stellung auf einem karosseriefesten Falz 30.

Dichtungen 32 und 34 sind jeweils einerseits zwischen dem Rahmen 24 und dem Gestell 28 und andererseits zwischen dem Gestell 28 und dem Falz 30 vorgesehen.

Im übrigen weist das Fahrzeug jeweils beidseitig an der Karosserie 2 eine Verriegelungsvorrichtung 36, 38 der Heckscheibe 10 in ausgefahrener Stellung auf (siehe Fig. 3).

Im Folgenden wird die Struktur der Verriegelungsvorrichtung 36 beschrieben. Selbstverständlich gilt diese Beschreibung auch für die andere Vorrichtung 38, welche zur Vorrichtung 36 symmetrisch ist.

Unter Bezugnahme auf die Figuren 4 bis 7 weist die Verriegelungsvorrichtung 36 zwei komplementäre Elemente 40 und 42 auf, d.h. also ein erstes Element 40, welches karosseriefest ist, und ein zweites Element 42, welches an dem Gestell 28 der Heckscheibe befestigt ist.

Genauer gesagt, umfasst das erste Element 40 einen Träger 44, welcher mit einer großen seitlichen Fläche 46 versehen ist, die Perforierungen 48 aufweist, welche das Montieren des Trägers 44 an der Karosserie 2 des Fahrzeuges ermöglichen.

Ein Haken 50 ist bezüglich des Trägers 44 zwischen einer ersten aktiven Verriegelungsposition, welche in Fig. 4 schematisch bei 50a in durchgezogenen Linien dargestellt wird, und bei der der Haken 50 mit einem Finger 52 zusammenwirkt, welcher von dem zweiten Elemente 42 getragen wird, und einer zweiten, schematisch bei 50b in gestrichelten Linien dargestellten Position, bei der der Finger 52 freigegeben wird und somit das Versenken der Heckscheibe 10 in ihrer Aufnahme ermöglicht, schwenkbar.

Ein Handgriff 54, der manuell durch einen Benutzer zwischen einer Verriegelungsposition, welche in Fig. 4 schematisch in durchgezogenen Linien bei 54a dargestellt wird, und einer schematisch bei 54b in gestrichelten Linien dargestellten Entriegelungsposition betätigt werden kann, bewirkt die Bewegung des Hakens 50 zwischen der Verriegelungsposition 50a und der Entriegelungsposition 50b.

Der Handgriff 54 ist an einer von dem Träger 44 getragenen Welle 56 befestigt. Die Welle 56 kann auch in einer alternativen Ausgestaltung von einem nicht dargestellten Motor angetrieben werden, um die Bewegung des Hakens 50 zwischen der Verriegelungsposition 50a und der Entriegelungsposition 50b zu bewirken. In diesem Falle ist der Handgriff 54 entbehrlich.

Ein Pleuel 58 ist ebenfalls mit einem seiner Enden 60 an der genannten Welle 56 befestigt, wobei der Haken 50 in kippbarer Weise auf dem vom anderen Ende 62 des Pleuels 58 getragenen Zapfen 61 montiert ist.

Schließlich erstreckt sich in Fig. 4 eine Feder 64 zwischen dem Haken 50 und dem Pleuel 58 im entgegengesetzten Uhrzeigersinn in der Weise, dass der Haken 50 in der oberen Position, d.h. also in der Eingriffposition des Fingers 52 gehalten wird.

Wie offensichtlich ist, bewirkt die durch eine entsprechende Bewegung des Handgriffs 54 erzeugte Winkelverschiebung des Pleuels 58 eine entsprechende Verschiebung des Hakens 50 entsprechend einer allgemeinen Bewegung, die tendenziell den Finger 52 entweder einhakt oder diesen freigibt, was jeweils von der Bewegungsrichtung des Handgriffs 54 abhängt.

Im übrigen ist der Träger 44 mit einer Erstreckung 66 versehen, die sich im Fahrzeug nach hinten unter der Vorderkante 67 der Heckscheibe 10 erstreckt und eine Öffnung aufweist, welche eine Aufnahme 68 bildet.

Wie schematisch in Fig. 5 dargestellt, ruht die Schiene 16 zumindest in der Nähe der Heckscheibe 10 auf dem Träger 44, ohne an diesem befestigt zu sein. Das freie Ende 16a der Schiene 16 in der Nähe der Heckscheibe 10 kann sich also bezogen auf das Fahrzeug in Querrichtung auf dem Träger 44, wie durch den Pfeil 90 schematisch dargestellt, und, wie schematisch durch den Pfeil 91 dargestellt wird, in vertikaler Richtung bewegen.

Diese Art der Montage der Schiene 16 ermöglicht es, wie später zu zeigen sein wird, die Schiene 16 auf der entsprechenden Schiene 20, die von der durch die Heckscheibe 10 gebildeten Einheit getragen wird, über ein durch die genannte Schiene 16 getragenes Element 88, dessen Funktion später zu zeigen sein wird, zu zentrieren und auszurichten.

Das zweite Element 42 der Verriegelungsvorrichtung 36 ist mit der Gesamtheit der Heckscheibe fest verbunden, die in den in den Figuren 4 bis 7 dargestellten Einheit durch die Scheibe 23 gebildet wird, welche in dem über das Scharnier 26 relativ zum Gestell 28 kippbaren Rahmen 24 montiert ist, welches Gestell seinerseits mit den Versenkarmen 12 fest verbunden und relativ zur Karosserie 2 des Fahrzeuges kippbar montiert ist.

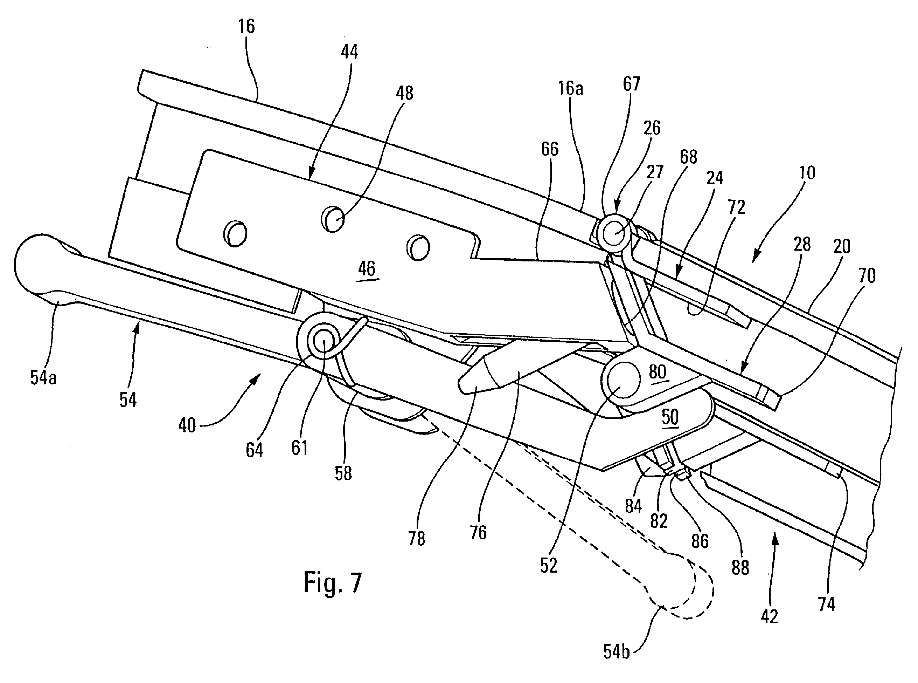

Wie schematisch in Fig. 7 dargestellt, wird das Scharnier 26 von dem Gestell 28 beidseitig des Fahrzeuges über eine Strebe getragen, welche an dem genannten Gestell 28 befestigt ist und schematisch bei 70 in Fig. 7 dargestellt wird.

Die mit dem Gestell 28 fest verbundene Strebe 70 weist ein als Zentrierdorn 76 ausgebildetes Zentrierorgan auf, das in ausgefahrener Stellung der Heckscheibe in die Zentrieraufnahme 68 eingreift.

In Fig. 7 ist zu sehen, dass zu diesem Zweck das freie Ende des Zentrierorgans 76 kegelstumpfförmig ist und eine Führungsrampe 78 des Zentrierorgans 76 in der Aufnahme 68 begrenzt.

Im übrigen weist die genannte Strebe 70 einen Arm 80 auf, der in das Innere des Fahrzeuges übersteht, wobei der genannte Arm 80 den Finger 52 trägt.

Der Rahmen 24, welcher das Glas 23 der Heckscheibe 10 bildet, ist beidseitig des Fahrzeuges 1 durch schematisch bei 72, 74 in der Fig. 7 dargestellte Streben mit dem Scharnier 26 verbunden, welche Streben drehbar um die Achse 27 des Scharniers 26 montiert sind, um die Öffnung des das Glas 23 aufnehmenden Rahmens 24 nach oben und nach vorne zu ermöglichen.

Die Strebe 74, welche mit dem Rahmen 24 der Heckscheibe fest verbunden ist, weist an ihrer unteren Fläche einen Zapfen 82 auf, der ein freies kegelstumpfförmiges Ende 84 aufweist und in der ausgefahrenen Stellung der Heckscheibe 10 in einen Ausschnitt 86 eingreift, welcher in dem von der Schiene 16 getragenen Bauteil 88 angeordnet ist.

Die Aufnahme 68 und der Dorn 76 sind in der Weise angeordnet, dass das Gestell 28 und die Heckscheibe 10 beim Ausfahren der Heckscheibe 10 in Bezug auf den Falz 30 und die von dem genannten Falz 30 getragene Dichtung 34 perfekt positioniert und zentriert werden. Dies ist insbesondere insoweit von besonderer Wichtigkeit, als das Gestell 28 am Ende der Ausfahrbewegung auf dem Falz 30 in einer Richtung zu liegen kommt, welche eine ausreichende vertikale Komponente aufweist, um die Dichtung 34 in regelmäßiger und gleichmäßiger Form zu komprimieren.

Zu diesem Zweck sind das Zentrierorgan 76 und die Aufnahme 68 in der Weise angeordnet, dass das Zentrierorgan 76 vor dem Beginn der Kompression der genannten Dichtung 34 durch das Gestell 28 in der Weise in die Aufnahme 68 eingreift, dass das Gestell 28 bezüglich des Falzes 30 und der Karosserie 2 zentriert wird.

Der Zapfen 82 und der Ausschnitt 86 des entsprechenden Bauteils 88 bilden beidseitig des Fahrzeuges einen Mechanismus für das Ausrichten der entsprechenden Schienen 16, 20 bzw. 18, 28.

Der Zapfen 82 und der Ausschnitt 86 sind in der Weise ausgebildet, dass der Zapfen 82 erst in den Ausschnitt 86 eingreift, nachdem das Zentrierorgan 76 in das Innere der entsprechenden Aufnahme 68 eingegriffen hat, wenn das Gestell 28 bezüglich der Karosserie 2 des Fahrzeuges kippt, so dass das Kippen des Rahmens 24 bezogen auf das Gestell 28 mittels des Scharniers 26 ermöglicht wird.

Bei jeder dieser Kippbewegungen dringt der Zapfen 82 in den Ausschnitt 86 des Bauteils 88 ein, das von der Schiene 16 getragen wird, deren Ende 16a sich bezüglich des Trägers 44, wie vorstehend beschrieben, frei bewegen kann.

Die Schiene 16 ist dementsprechend zu der vom Rahmen 24 getragenen Schiene 20 fluchtend platziert, wobei der gleiche Vorgang abläuft, um die Schiene 18 bezüglich der entsprechenden Schiene 22 der anderen Seite des Fahrzeuges auszurichten.

Es wurde somit ein Verriegelungsmechanismus für die Gesamtheit der Heckscheibe 10 mit ihrem Gestell 28 an der Karosserie 2 eines Fahrzeuges beschrieben, welches mit einem zu öffnenden, auf der Heckscheibe faltbaren Dach, insbesondere mit einem zu öffnenden Dach aus Stoff ausgerüstet werden kann.

Dieser Mechanismus funktioniert in drei Phasen während des Ausfahrens der Heckscheibeneinheit in ihre geschlossene Stellung, dies gilt für beide Seiten des Fahrzeuges.

In einer ersten Phase bewirkt das in die entsprechende Aufnahme 68 eindringende Zentrierorgan 76 eine präzise Führung und Zentrierung des Gestells 28, welches die von dem Falz 30 getragene Dichtung 34 abdeckt und gleichmäßig komprimiert.

In einer zweiten Phase richtet der in den entsprechenden Ausschnitt 86 eindringende Zapfen 82 die von dem Träger 44 getragene Schiene mit der von dem Rahmen 24 getragenen Schiene 20 aus.

In einer dritten Phase nach dem Ende des Ausfahrens der Heckscheibeneinheit ermöglicht eine Betätigung des Handgriffs 54 die Verriegelung der Heckscheibeneinheit 10 an der Karosserie 2 mittels des mit dem Finger 52 im Eingriff stehenden Hakens 50.

Am Ende der Schließbewegung des Rahmens 24 und des Glases 23, die vorher geöffnet waren, um Zugang zum Kofferraum zu haben, richtet der in den Ausschnitt 86 eindringende Zapfen 82 die Schiene 16 relativ zur Schiene 20 aus, um eine bequeme und zuverlässige Schließung des zu öffnenden Daches zu ermöglichen.

Es wurde somit eine Verriegelungs- und Zentriervorrichtung beschrieben, die es ermöglicht, ein präzises und zuverlässiges Zentrieren und Verriegeln und eine Kontinuität der Führung der Elemente des zu öffnenden Daches sicherzustellen, wobei gleichzeitig realistische Abmessungstoleranzen auf der Ebene der Karosserie und der Montagemittel der Heckscheibeneinheit an der genannten Karosserie sowie des Rahmens der Heckscheibe auf dem Gestell der letzteren ebenso berücksichtigt wurden wie die Montage- und Kompressionsbedingungen der Dichtungen 32 und 34.

Natürlich ist die vorliegende Erfindung nicht auf die Ausführungsformen, die oben beschrieben wurden, beschränkt, und es können zahlreiche Änderungen und Modifikationen angebracht werden, ohne den Erfindungsrahmen zu verlassen, der durch die Ansprüche definiert ist.

### Bezugszeichenliste

- 1: Kraftfahrzeug
- 2: Karosserie
- 5: Deckel
- 10: Heckscheibe
- 11: Kofferraum
- 12: Versenkmechanismus
- 13: Kippbewegung
- 14: Dach
- 15: obere Fläche
- 16: Längsschiene
- 18: Längsschiene
- 20: Schiene
- 22: Schiene
- 23: Glas
- 24: Rahmen
- 26: Scharnier
- 27: Achse
- 28: Gestell
- 30: Falz
- 32: Dichtung
- 34: Dichtung
- 36: Verriegelungsvorrichtung
- 38: Verriegelungsvorrichtung
- 40: Element
- 42: Element
- 44: Träger
- 46: seitliche Fläche
- 48: Perforierung
- 50: Haken
- 50a: Verriegelungsposition
- 50b: Entriegelungsposition
- 52: Finger
- 54: Handgriff
- 56: Welle
- 58: Pleuel
- 60: Ende
- 62: Ende
- 64: Feder
- 66: Erstreckung
- 67: Vorderkante
- 68: Aufnahme
- 70: Strebe
- 72: Strebe
- 74: Strebe
- 76: Zentrierorgan
- 78: Führungsrampe
- 80: Arm
- 82: Zapfen
- 84: Ende
- 86: Ausschnitt
- 88: Bauteil

## Patentansprüche

1. Verriegelungsvorrichtung einer versenkbaren Heckscheibe (10) eines Kraftfahrzeuges an dessen Karosserie, wobei die Heckscheibe (10) auf einem Gestell (28) montiert ist, das bezogen auf die Karosserie beweglich ist zwischen einer ausgefahrenen aktiven Stellung, bei der das Gestell (28) auf einem karosseriefesten Falz (30) aufliegt, und einer versenkten Stellung, bei der die Heckscheibe (10) in einer im Fahrzeug vorgesehenen Aufnahme untergebracht ist, wobei die Vorrichtung mindestens ein Verriegelungsorgan (36, 38) aufweist, **dadurch gekennzeichnet, dass** wenigstens ein Mechanismus zur Zentrierung des Gestells (28) relativ zur Karosserie vorgesehen ist, welcher ein Zentrierorgan (76) und eine Zentrieraufnahme (68) aufweist, die am Ende des Ausfahrhubs der Heckscheibe ineinander eingreifen, und dass die durch die Heckscheibe (10) auf ihrem Gestell (28) gebildete Einheit auf ihrer oberen Fläche beidseitig des Fahrzeuges eine Schiene (20, 22) aufweist, die dazu bestimmt ist, bewegliche Elemente eines zu öffnenden Daches in geöffneter Stellung desselben aufzunehmen, und die sich in der Verlängerung einer entsprechenden karosseriefesten Schiene (16, 18) erstreckt, und **dadurch**, dass die Vorrichtung beidseitig des Fahrzeuges eines Ausrichtungsmechanismus der Schienen (16, 20, 18, 22) aufweist, welcher einen Zapfen (82) aufweist, der in einen Ausschnitt (86) in geschlossener Stellung der Heckscheibe (10) eingreift, wobei der Zapfen (82) vorzugsweise fest mit der Heckscheibe (10) verbunden ist, und der Ausschnitt (86) vorzugsweise an einem mit der entsprechenden, von der Karosserie (2) des Fahrzeuges getragenen Schiene (16, 18) verbundenen Element (88) fest verbunden ist.

2. Verriegelungsvorrichtung nach Anspruch 1, **dadurch gekennzeichnet, dass** das Zentrierorgan als Dorn (76) mit einer an seinem freien Ende angeordneten kegelstumpfförmigen peripherischen Fläche (78) ausgebildet ist.

3. Verriegelungsvorrichtung nach Anspruch 1 oder 2, **dadurch gekennzeichnet, dass** das Zentrierorgan (76) vor dem Beginn der Kompression einer am Falz (30) angeordneten Dichtung (34) einzugreifen beginnt.

4. Verriegelungsvorrichtung nach einem der vorstehenden Ansprüche, **dadurch gekennzeichnet, dass** das Verriegelungsorgan (36, 38) einen Haken (50), der zwischen einer Verriegelungsposition der Heckscheibe (10) in ausgefahrener Stellung und einer freigegebenen Position der genannten Heckscheibe (10) schwenkbar ist, und des weiteren einen Finger (52) umfasst, welcher mit dem genannten Haken (50) zusammenwirkt, um die genannte Heckscheibe (10) zu verriegeln, wobei der Träger (44) vorzugsweise an der Karosserie des Fahrzeuges montiert ist, und der Finger (52) vorzugsweise mit dem Gestell (28) der Heckscheibe fest verbunden ist.

5. Verriegelungsvorrichtung nach einem der vorstehenden Ansprüche, **dadurch gekennzeichnet, dass** Verriegelungsorgane (36, 38) und Zentrierorgane (76) jeweils auf beiden Seiten des Gestells 28 vorgesehen sind.

6. Verriegelungsvorrichtung nach einem der vorhergehenden Ansprüche, **dadurch gekennzeichnet, dass** die Verriegelungsorgane (36, 38) einen Handgriff (54) umfassen, der mit einem seiner Enden mit einer drehbaren Welle (56) fest verbunden ist, an der mit einem seiner Enden (60) ein Pleuel (58) befestigt ist, wobei der Haken (50) in kippbarer Weise an dem entgegengesetzten Ende (62) des genannten Pleuels (58) montiert ist.

7. Verriegelungsvorrichtung nach Anspruch 6, **dadurch gekennzeichnet, dass** sie elastisch verformbare Mittel (64) aufweist, die den Haken (50) in der Einhakposition des Fingers (52) beaufschlagen.

8. Verriegelungsvorrichtung nach einem der vorhergehenden Ansprüche, **dadurch gekennzeichnet, dass** das Glas (23) der Heckscheibe (10) an einem Rahmen (24) befestigt ist, der an seiner oberen Fläche Schienen (20, 22) aufweist und an seiner unteren Fläche die Zapfen (82) oder die Bauteile (88), welche die Ausschnitte (86) aufweisen.

9. Verriegelungsvorrichtung nach einem der vorhergehenden Ansprüche, **dadurch gekennzeichnet, dass** das freie Ende (84) jedes Zapfens (82) kegelstumpfförmig ist und somit eine Führungsrampe (84) des Zapfens (82) in dem entsprechenden Ausschnitt (86) aufweist.

10. Verriegelungsvorrichtung nach einem der vorhergehenden Ansprüche, **dadurch gekennzeichnet, dass** jeder Zapfen (82) und der entsprechende Ausschnitt (86) in einer solchen Weise angeordnet sind, dass der Zapfen (82) erst nach dem Eingriff des Zentrierorgans (76) im Inneren der Aufnahme (68) in den Ausschnitt (86) eingreift.

11. Verriegelungsvorrichtung nach einem der vorhergehenden Ansprüche, wobei der Rahmen (24) in drehbarer Weise auf dem Gestell (28) zwischen einer geschlossenen Stellung, bei der der Rahmen (24) auf dem Gestell (28) ruht, und einer im Fahrzeug nach oben und nach vorne geöffneten Stellung für den Zugang zum Aufnahmeraum (11) montiert ist, **dadurch gekennzeichnet, dass** jeder Zapfen (82) und der entsprechende Ausschnitt (86) in der Weise angeordnet sind, dass diese Kippbewegung erlaubt wird.

12. Kraftfahrzeug mit einem zu öffnenden Dach, insbesondere einem elastischen, aus Stoff bestehenden Dach, **dadurch gekennzeichnet, dass** es des Weiteren eine Verriegelungsvorrichtung nach einem beliebigen der vorstehenden Ansprüche aufweist.

## Claims

1. Locking device for a retractable rear window (10) of a motor vehicle on the body of the latter, the rear window (10) being mounted on a support (28) which, in relation to the body, can be moved between an extended active position, in which the support (28) rests on a rebate (30) fixed to the body, and a retracted position, in which the rear window (10) is accommodated in a receptacle provided in the vehicle, the device having at least one locking element (36, 38), **characterized in that** at least one mechanism is provided for centring the support (28) relative to the body and has a centring element (76) and a centring receptacle (68), which interengage at the end of the extension travel of the rear window, and **in that** the unit formed by the rear window (10) on its support (28) has on its upper surface on both sides of the vehicle a rail (20, 22) which is intended to accommodate movable elements of a roof to be opened when the latter is in the open position, and which extends in the extension of a corresponding rail (16, 18) fixed to the body, and **in that** the device on both sides of the vehicle has an alignment mechanism for the rails (16, 20; 18, 22), which has a pin (82) which engages in a cut-out (86) in the closed position of the rear window (10), the pin (82) preferably being connected firmly to the rear window (10) and the cut-out (86) preferably being firmly connected to an element (88) connected to the corresponding rail (16, 18) carried by the body (2) of the vehicle.

2. Locking device according to Claim 1, **characterized in that** the centring element is formed as a spike (76) having a peripheral surface (78) like a truncated cone arranged at its free end.

3. Locking device according to Claim 1 or 2, **characterized in that** the centring element (76) begins to engage before the start of the compression of a seal (34) arranged on the rebate (30).

4. Locking device according to one of the preceding claims, **characterized in that** the locking element (36, 38) comprises a hook (50), which can be pivoted between a locking position of the rear window (10) in the extended position and a released position of the said rear window (10), and further comprises a finger (52) which interacts with the said hook (50) in order to lock the said rear window (10), the carrier (44) preferably being mounted on the body of the vehicle and the finger (52) preferably being firmly connected to the support (28) of the rear window.

5. Locking device according to one of the preceding claims, **characterized in that** locking elements (36, 38) and centring elements (76) are in each case provided on both sides of the support (28).

6. Locking device according to one of the preceding claims, **characterized in that** the locking elements (36, 38) comprise a handgrip (54) which is firmly connected at one of its ends to a rotatable shaft (56), to which a crank (58) is fixed at one of its ends (60), the hook (50) being mounted on the opposite end (62) of the said crank (58) such that it can be tilted.

7. Locking device according to Claim 6, **characterized in that** it has elastically deformable means (64) which act on the hook (50) in the hooked-in position of the finger (52).

8. Locking device according to one of the preceding claims, **characterized in that** the glass (23) of the rear window (10) is fixed to a frame (24) which has rails (20, 22) on its upper surface, and on its lower surface has the pins (82) or the components (88) which have the cut-outs (86)

9. Locking device according to one of the preceding claims, **characterized in that** the free end (84) of each pin (82) is like a truncated cone and thus has a guide ramp (84) for the pin (82) in the corresponding cut-out (86).

10. Locking device according to one of the preceding claims, **characterized in that** each pin (82) and the corresponding cut-out (86) are arranged in such a way that the pin (82) engages in the cut-out (86) only after the centring element (76) has engaged in the interior of the receptacle (68).

11. Locking device according to one of the preceding claims, the frame (24) being mounted on the support (28) such that it can rotate between a closed position, in which the frame (24) rests on the support (28), and a position opened upwards and forwards in the vehicle for access to the holding compartment (11), **characterized in that** each pin (82) and the corresponding cut-out (86) are arranged in such a way that this tilting movement is permitted.

12. Motor vehicle having a roof that can be opened, in particular an elastic roof composed of material, **characterized in that** it also has a locking device according to any one of the preceding claims.

## Revendications

1. Système de verrouillage d'une fenêtre arrière (10) escamotable d'un véhicule sur la carrosserie de ce dernier, la fenêtre arrière (10) étant montée sur un châssis (28) qui peut être déplacé par rapport à la carrosserie entre une position active extrême, dans laquelle le châssis (28) s'appuie contre une rainure (30) fixée à la carrosserie, et une position abaissée, dans laquelle la fenêtre arrière (10) est disposée dans un logement prévu dans le véhicule, le système présentant au moins un élément de verrouillage (36, 38), **caractérisé en ce qu'**au moins un mécanisme destiné à centrer le châssis (28) par rapport à la carrosserie est prévu, lequel mécanisme présente un élément de centrage (76) et un logement de centrage (68) qui s'engagent l'un dans l'autre à l'extrémité de la course extrême de la fenêtre arrière, et **en ce que** l'unité formée par la fenêtre arrière (10) sur son châssis (28) présente sur sa face supérieure, des deux côtés du véhicule, un rail (20, 22) qui est destiné à loger des éléments mobiles d'un toit pouvant s'ouvrir en position ouverte de celui-ci et qui s'étend dans le prolongement d'un rail (16, 18) correspondant fixé à la carrosserie, et **en ce que** le système présente, des deux côtés du véhicule, un mécanisme d'alignement des rails (16, 20 ; 18, 22) lequel présente un pivot (82) qui s'engage dans une encoche (86) en position fermée de la fenêtre arrière (10), le pivot (82) étant relié de préférence fixement à la fenêtre arrière (10) et l'encoche (86) étant raccordée de préférence fixement à un élément (88) relié au rail (16, 18) correspondant porté par la carrosserie (2) du véhicule.

2. Système de verrouillage selon la revendication 1, **caractérisé en ce que** l'élément de centrage est conçu comme un mandrin (76) avec une surface (78) périphérique de forme tronconique disposée à son extrémité libre.

3. Système de verrouillage selon la revendication 1 ou 2, **caractérise en ce que** l'élément de centrage (76) commence à s'engager avant le début de la compression d'une garniture d'étanchéité (34) disposée sur la rainure (30).

4. Système de verrouillage selon l'une quelconque des revendications précédentes, **caractérisé en ce que** l'élément de verrouillage (36, 38) comprend un crochet (50) qui peut être pivoté entre une position de verrouillage de la fenêtre arrière (10) en position extrême et une position de libération de ladite fenêtre arrière (10), et en outre un doigt (52) qui agit conjointement avec ledit crochet (50) pour verrouiller ladite fenêtre arrière (10), le support (44) étant monté de préférence sur la carrosserie du véhicule et le doigt (52) étant de préférence relié fixement au châssis (28) de la fenêtre arrière.

5. Système de verrouillage selon l'une quelconque des revendications précédentes, **caractérisé en ce que** des éléments de verrouillage (36, 38) et des éléments de centrage (76) sont respectivement prévus des deux côtés du châssis (28).

6. Système de verrouillage selon l'une quelconque des revendications précédentes, **caractérisé en ce que** les éléments de verrouillage (36, 38) comprennent une poignée (54) qui est reliée fixement par le biais de l'une de ses extrémités à un arbre (56) pouvant pivoter, sur lequel est fixée une bielle (58) par le biais de l'une de ses extrémités (60), le crochet (50) étant monté de façon rabattable sur l'extrémité opposée (62) de ladite bielle (58).

7. Système de verrouillage selon la revendication 6, **caractérisé en ce qu'**il présente des moyens (64) déformables élastiquement qui chargent le crochet (50) en position d'accrochage du doigt (52).

8. Système de verrouillage selon l'une quelconque des revendications précédentes, **caractérisé en ce que** le verre (23) de la fenêtre arrière (10) est fixé sur un cadre (24) qui présente sur sa surface supérieure des rails (20, 22) et sur sa surface inférieure les pivots (82) ou les composants (88) qui présentent les encoches (86).

9. Système de verrouillage selon l'une quelconque des revendications précédentes, **caractérisé en ce que** l'extrémité libre (84) de chaque pivot (82) est de forme tronconique et présente ainsi une rampe de guidage (84) du pivot (82) dans l'encoche (86) correspondante.

10. Système de verrouillage selon l'une quelconque des revendications précédentes, **caractérisé en ce que** chaque pivot (82) et l'encoche (86) correspondante sont disposés de telle manière que le pivot (82) s'engage dans l'encoche (86) seulement après l'engagement de l'élément de centrage (76) à l'intérieur du logement (68).

11. Système de verrouillage selon l'une quelconque des revendications précédentes, le cadre (24) étant monté de manière à pouvoir pivoter sur le châssis (28) entre une position fermée, dans laquelle le cadre (24) repose sur le châssis (28), et une position ouverte dans le véhicule vers le haut et vers l'avant pour accéder à l'espace de réception (11), **caractérisé en ce que** chaque pivot (82) et l'encoche (86) correspondante sont disposés de sorte que ce mouvement de bascule soit permis.

12. Véhicule avec un toit pouvant s'ouvrir, en particulier avec un toit élastique, composé de tissu, **caractérisé en ce qu'**il présente en outre un système de verrouillage selon l'une quelconque des précédentes revendications.
